# EUROPÄISCHE PATENTSCHRIFT

(11) **EP 3 675 297 B1**
(45) Veröffentlichungstag und Bekanntmachung des Hinweises auf die Patenterteilung: **28.07.2021**
(21) Anmeldenummer: 19213286.8
(22) Anmeldetag: 03.12.2019
(51) Int. Cl.: H02G 3/08, H02G 3/12

(54) **HALTEELEMENT FÜR EIN INSTALLATIONSGEHÄUSE**
HOLDING ELEMENT FOR AN INSTALLATION DEVICE
ÉLÉMENT DE FIXATION POUR UN BOÎTIER D'INSTALLATION

(30) Priorität: 27.12.2018 DE 102018133622
(43) Veröffentlichungstag der Anmeldung: 01.07.2020
(73) Patentinhaber: Schneider Electric Industries SAS, 92500 Rueil Malmaison (FR)
(72) Erfinder: NARAYANAN, Shree Ganesh, 51643 Gummersbach (DE); VICKTORIUS, Richard, 50733 Köln (DE); KULLOLLI, Dharmveer, 51674 Wiehl (DE)
(74) Vertreter: Herrmann, Jochen

(56) Entgegenhaltungen:
- DE-A1- 3 734 029
- DE-U1-202014 009 976
- FR-A1- 2 769 759
- US-A1- 2008 272 071

## Beschreibung

Die Erfindung betrifft ein Halteelement für ein Installationsgehäuse, wobei das Halteelement als langgestrecktes Kunststoffbauteil ausgebildet ist, wobei das Halteelement in seinem vorderen Bereich einen Hülsenabschnitt und in seinem hinteren Bereich einen einstückig mit dem Hülsenabschnitt verbundenen Verlängerungsabschnitt aufweist, wobei der Hülsenabschnitt eine Schraubaufnahme ausbildet, wobei der Hülsenabschnitt an seinem einen Ende verschlossen und an seinem gegenüberliegenden Ende eine mit einem Verschluss verschließbare Öffnung aufweist, und wobei zur Befestigung des Halteelements an dem Installationsgehäuse an einer Längsseite des Haltelements ein in Längserstreckung des Halteelements verlaufendes Führungselement angeordnet ist.

Aus dem Stand der Technik sind Installationsgehäuse zur Aufnahme elektronischer Installationsgeräte bekannt, welche zur Anordnung in Wandausnehmungen vorgesehen sind. Solche Installationsgehäuse können einen quadratischen oder einen rechteckigen Querschnitt aufweisen. Da die Ausbildung von quadratischen oder rechteckigen Wandausnehmungen aufwändig ist, werden quadratische oder rechteckige Installationsgehäuse bevorzugt in einzelne oder benachbarte, sich gegenseitig überlappende Bohrungen eingesetzt. Mittels überlappender Bohrungen können große Wandausnehmung ausgebildet werden, um entsprechend große Installationsgehäuse aufnehmen zu können. Die Durchmesser und die Abstände der sich überlappenden Bohrungen sind standardisiert, sodass in standardisierten Rastermaßen ausgebildete Installationsgehäuse in die Wandausnehmungen eingesetzt werden können.

Um quadratische oder rechteckige Installationsgehäuse innerhalb einer oder mehrerer, sich überlappender Wandbohrungen mit jeweils zumindest annähernd kreisrundem Querschnitt korrekt ausrichten und befestigen zu können sind Fixierhilfen bekannt, welche einen Übergang von der geraden Seitenwand des Installationsgehäuses zu der abgerundeten Seitenwandung der Wandausnehmung herstellen.

Der Querschnitt der eine Wandausnehmung bildenden Bohrungen kann deutlich von einem kreisrunden Querschnitt abweichen. Dies gilt insbesondere für in leicht brechende Wandmaterialien eingebrachte Bohrungen, wie beispielsweise in Ziegelwänden. Die exakte Ausrichtung des Installationsgehäuses ist in solchen unregelmäßig ausgeformten Wandausnehmungen erschwert.

Installationsgehäuse können durch zusätzliche Schraubverbindung an der Wand befestigt werden. Z.B. offenbart die Druckschrift FR2769759A1 ein Befestigungselement für ein Gehäuse.

Elektrokabel können durch in Gehäusewandung eingebrachte Kabeldurchführungen in das Installationsgehäuse eingeführt werden. Der zwischen dem Installationsgehäuse und der Seitenwandung der Wandausnehmung ausgebildete Spalt wird üblicherweise mit Füllmaterial, beispielsweise mit Beton oder Mörtel, ausgefüllt. Die Vorderseite der Wand kann verputzt werden, sodass das Installationsgehäuse vorderseitig bündig mit der Wandfläche abschließt.

In das Installationsgehäuse kann eine elektrische Installationseinheit eingesetzt, angeschlossen und an dem Installationsgehäuse befestigt. Dazu kann die Installationseinheit beispielsweise mittels eines übergreifenden Rahmens, der an dem Installationsgehäuse festgeschraubt wird, in diesem gehalten sein. Zur Aufnahme der Befestigungsschrauben sind langgezogene Halteelemente bekannt, welche außenseitig und in Tiefenrichtung der Wandausnehmung ausgerichtet an dem Installationsgehäuse lösbar befestigt sind. Der Öffnung der Wandausnehmung zugewandt weisen solche Halteelemente einen einseitig verschlossenen und gegenüberliegend verschließbaren Hülsenabschnitt auf, in den die Befestigungsschraube eingeschraubt werden kann. Der Hülsenabschnitt ist rückseitig und damit der Wandausnehmung zugewandt fest verschlossen, um ein Eindringen von Beton oder Mörtel zu vermeiden. Nach vorne hin ist der Hülsenabschnitt durch einen steckbaren Verschluss geschlossen, welcher vorzugsweise einstückig über ein Filmscharnier mit dem Mantel des Hülsenabschnitts verbunden ist. Zum Einschrauben einer Befestigungsschraube muss dieser Verschluss geöffnet werden, was insbesondere bei einer bis zum Rand des Installationsgehäuses aufgetragenen Putzschicht einen diffizilen Arbeitsschritt bedeutet. Eine Beschädigung der dünnen Putzschicht kann dabei nicht ausgeschlossen werden. Wenn eine Beschädigung auftritt, so muss die Putzschicht an dieser Stelle nachbearbeitet werden Der Verschluss muss nach dem Öffnen, beispielsweise durch Durchtrennen des Filmscharniers, abgetrennt werden.

Es ist Aufgabe der Erfindung, ein kostengünstig herstellbares Halteelement zur Festlegung an einem Installationsgehäuse bereitzustellen, wobei das Haltesystem nach Fertigstellung einer Wand, in der das Installationsgehäuse eingesetzt ist, ein einfaches Einführen von Schrauben zur Befestigung von Installationsgeräten in dem Installationsgehäuse ermöglichen soll.

Die Aufgabe wird dadurch gelöst, dass der Hülsenabschnitt an seinem dem Verlängerungsabschnitt zugewandten Ende mit dem Verschluss verschließbar ausgebildet ist. Der Verschluss verhindert, dass Beton, Mörtel und dergleichen in die Schraubaufnahme eindringt. Eine Schraube zur Befestigung eines Installationsgeräts an dem Installationsgehäuse kann daher einfach und bestimmungsgemäß in die Schraubaufnahme eingeschraubt werden. Vorteilhaft drückt in den Spalt zwischen dem Installationsgehäuse und der Seitenwandung der Wandausnehmung eingebrachter Beton, Mörtel und dergleichen von hinten gegen den Verschluss, sodass dieser in seiner geschlossenen Position gehalten ist. Wird, nachdem die Wand fertiggestellt ist, von außen eine Schraube in die Schraubaufnahme eingeschraubt, so kann einfach eine feste Schraubverbindung zwischen der Installationseinheit und dem Installationsgehäuse werden. Hierbei kann es insbesondere vorgesehen sein, dass der der Hülsenabschnitt ein eingeformtes Innengewinde aufweist oder dass es sich bei der verwendeten Schraube um eine selbstfurchende Schraube handelt. Insbesondere in Kombination mit an dem Installationsgehäuse befestigten Adaptern, welche einen Anschluss des Installationsgehäuses an der Seitenwandung der Wandausnehmung unter Einstellung eines definierten Abstands zwischen der Seitenwandung und dem Installationsgehäuse bewirken, können die Halteelemente vorteilhaft sowohl in Betonwänden wie auch in Ziegelwänden verwendet werden. Besonders vorteilhaft ist zur Vorderseite des Halteelements hin weisend kein lösbarer Verschluss der Schraubaufnahme erforderlich. Zum Einführen einer Schraube in die Schraubaufnahme muss demnach kein Verschluss geöffnet werden, was insbesondere nach dem Verputzen der Wand einen aufwendigen Montageschritt darstellt. Eine Beschädigung der Putzschicht ist hierbei ausgeschlossen.

Wird zur Befestigung der Installationseinheit eine lange Schraube verwendet, so ist dies ebenfalls problemlos möglich. Die lange Schraube kann den Verschluss aufdrücken oder durchstoßen, ohne dass die Einschraubbewegung und die zuverlässige Fixierung der Installationseinheit an dem Installationsgehäuse behindert wird.

Um zu verhindern, dass Baumaterial, insbesondere auf die Wand aufgetragener Putz, von vorne in die Schraubaufnahme eindringt kann es vorgesehen sein, dass der Hülsenabschnitt an seinem dem Verlängerungsabschnitt abgewandten Ende von einem einteilig angeformten Deckel verschlossen ist. Die einteilige Verbindung zu dem Deckel und dem Hülsenabschnitt ermöglicht eine kostengünstige Herstellung des Halteelements, beispielsweise durch Spritzguss. Dabei kann während der Formgebung ein Schieber von Seiten des Verlängerungsabschnitts eingeführt werden und die Schraubaufnahme mit dem zur Vorderseite hin ausgerichteten Deckel ausformen.

Ist es vorgesehen, dass an dem Deckel eine Positioniermarke angeordnet ist, wobei die Positioniermarke vorzugsweise als Vertiefung, insbesondere als eine auf der Oberseite des Deckels eingeformte konkave Mulde, ausgebildet ist, so kann eine in die Schraubaufnahme einzuschraubend Schraube mit ihrer Spitze an der Positioniermarke angesetzt und damit gegenüber der Schraubaufnahme ausgerichtet werden. Die Vertiefungen vereinfacht die exakte Ausrichtung der Schraube. Die Positioniermarke ermöglicht weiterhin das einfache Auffinden des Halteelements, beispielsweise nach dem Verputzen der Wand.

Die Schraube kann dann ohne Hilfswerkzeug einfach durch den Deckel gesteckt und in die Schraubaufnahme eingeschraubt werden, wenn vorgesehen ist, dass die Materialstärke des Deckels im Bereich der Positioniermarke gegenüber dem die Positioniermarke umgebenden Bereich des Deckels und/oder gegenüber der Wandstärke des an den Deckel angrenzenden Bereichs des Hülsenabschnitts verringert ist.

Eine einfache Herstellung des Halteelements und eine einfache Befestigung an dem Installationsgehäuse kann dadurch erreicht werden, dass der Verschluss mit einem Filmscharnier einteilig mit dem Verlängerungsabschnitt oder dem Hülsenabschnitt verbunden ist. Der durch das Filmscharnier geeignet positionierte Verschluss kann mit geringem Aufwand, insbesondere auch automatisiert, in die Öffnung des Hülsenabschnitts eingesteckt werden.

Während der Befestigung des Installationsgehäuses in einer Wandausnehmung einer Wand ist der Verschluss der Schraubaufnahme des Halteelements vorteilhaft bereits geschlossen. Die Halteelemente werden daher vorzugsweise schon mit geschlossenem Verschluss ausgeliefert. Ein automatisierter, maschineller Verschluss des Hülsenabschnitts kann dadurch ermöglicht werden, dass der Verschluss mittels des Filmscharniers gegenüberliegend der das Führungselement tragenden Längsseite des Halteelements angeformt ist, wobei vorzugsweise die durch das Filmscharnier gebildete Biegeachse quer zur Längserstreckung des Halteelements verläuft. Der derart positionierte Verschluss ist gut zugängig und kann durch die durch Biegen des Filmscharniers vorgegebene Bewegung in die rückwärtige Öffnung der Schraubaufnahme eingesteckt werden.

Vorzugsweise kann es vorgesehen sein, dass der Verlängerungsabschnitt eine von Wandabschnitten eingefasste und entlang der Längserstreckung des Halteelements ausgerichtete Rinne ausbildet und dass die Rinne in axialer Verlängerung des Hohlraums des Hülsenabschnitts ausgebildet ist. Eine Schraube zur Befestigung der Installationsdose an der Wand kann dann durch den Hohlraum der Schraubaufnahme und die Rinne geführt werden.

Entsprechend einer bevorzugten Ausgestaltungsvariante der Erfindung ist es vorgesehen, dass der Verschluss in der Schließposition zumindest bereichsweise von den Wandabschnitten der Rinne seitlich überdeckt ist. In der Schließposition ist der Verschluss auf diese Weise seitlich geschützt und kann bei der Montage des Halteelements und der Installationsdose nicht unbeabsichtigt aufgezogen werden. Bei entsprechender Ausbildung der Wandabschnitte kann der Verschluss auch zwischen den Wandabschnitten in die Schließposition verstellt werden. Die durch die Wandabschnitte bewirkte Zwangsführung des Verschlusses ermöglicht ein zuverlässiges automatisiertes Verschließen der Schraubaufnahme.

Um in einem Spritzgussprozess einen zur Ausformung der Schraubaufnahme vorgesehenen Schieber positionieren und nach der Formgebung aus der Schraubaufnahme herausziehen zu können kann es vorgesehen sein, dass der Querschnitt der Rinne gleich oder größer als der Querschnitt des die Schraubaufnahme bildenden Hohlraums des Hülsenabschnitts ausgebildet ist. Der Schieber kann so entlang der Rinne bewegt werden.

Vorzugsweise kann es vorgesehen sein, dass die Rinne an ihrem dem Hülsenabschnitt abgewandten Ende in ihrer Längsrichtung offen ausgebildet ist und/oder dass die Rinne entlang ihrer Längserstreckung gegenüberliegend zu dem Führungselement offen ausgebildet ist. Der Schieber einer Spritzgussform kann so durch die stirnseitige Öffnung der Rinne geführt werden. Durch die entlang der Längserstreckung verlaufende seitliche Öffnung kann der durch das Filmscharnier gehaltene Verschluss in die Rinne eingeführt und zu der Öffnung des Hülsenabschnitts geführt werden.

Eine ungewollte Verwindung des Verlängerungsabschnitts und seiner Rinne kann dadurch vermieden oder zumindest verringert werden, dass an den Außenseiten der Wandabschnitte Versteifungselemente angeformt sind.

Dabei kann eine gute Versteifung der Wandabschnitte und damit der Rinne dadurch erreicht werden, dass die Versteifungselemente durch entlang der Längserstreckung des Halteelements beabstandet zueinander angeordnete, sich quer zur Längserstreckung des Halteelements erstreckende Stege gebildet sind.

Eine zusätzliche Versteifung des Verlängerungsabschnitts wird erreicht, wenn vorgesehen ist, dass die Führungsschiene zumindest abschnittsweise gegenüberliegend von der Rinne an dem Verlängerungsabschnitts angeformt ist.

Entsprechend einer bevorzugten Ausgestaltungsvariante der Erfindung kann es vorgesehen sein, dass ein Halteansatz mittelbar oder unmittelbar an das dem Verlängerungsabschnitt zugeordnete Ende der Führungsschiene angeschlossen ist, dass der Halteansatz das als Führungsschiene ausgebildete Führungselement quer zu dessen Längserstreckung überragt und dass an den Halteansatz seitlich der Führungsschiene in Richtung zur Führungsschiene ausgerichtete Anlaufschrägen angeformt sind, die in steile Rastflanken übergehen. Die vorzugsweise in Einschubrichtung des Halteelements auf das Installationsgehäuses ausgerichteten Anlaufschrägen ermöglichen, dass der Halteansatz unter geringer seitlicher Verstellung über den Rand des Installationsgehäuses gezogen werden kann, um dann in die an dem Installationsgehäuse vorgesehene Halteansatzaufnahme einzurasten. Durch diese Rastverbindung ist das Halteelement in und entgegen seiner Einschubrichtung an dem Installationsgehäuse gehalten.

Die Erfindung wird im Folgenden anhand der in den Zeichnungen dargestellten Ausführungsbeispiele näher erläutert. Es zeigen:
- Fig. 1: in einer perspektivischen Darstellung mit Blick auf dessen Oberseite einen Adapter zur Positionierung und Befestigung eines Installationsgehäuses in einer Wandausnehmung mit Montageelementen und ersten Fixieransätzen,
- Fig. 2: den in Fig. 1 gezeigten Adapter in einer Draufsicht,
- Fig. 3: den in Fig. 1 gezeigten Adapter in einer perspektivischen Darstellung mit Blick auf die Unterseite,
- Fig. 4: in einer perspektivischen Darstellung mit Blick auf die Oberseite einen zweiten Adapter zur Positionierung und Befestigung eines Installationsgehäuses mit zweiten Fixieransätzen,
- Fig. 5: den in Fig. 4 gezeigten zweiten Adapter in einer Draufsicht,
- Fig. 6: den in Fig. 4 gezeigten zweiten Adapter in einer perspektivischen Darstellung mit Blick auf die Unterseite,
- Fig. 7: in einer perspektivischen Darstellung den in Fig. 1 gezeigten Adapter mit eingesetzten Schrauben,
- Fig. 8: in einer perspektivischen Darstellung ein Halteelement mit geöffnetem Verschluss,
- Fig. 9: das in Fig. 8 gezeigte Halteelement mit geschlossenem Verschluss,
- Fig. 10: in einer perspektivischen Darstellung das in Fig. 8 gezeigte Halteelement mit einer Befestigungsschraube,
- Fig. 11: in einer perspektivischen Darstellung ein Installationsgehäuse mit einem aufgesetzten Gehäusedeckel und zur Befestigung gegenüber dem Installationsgehäuse ausgerichteten Halteelementen,
- Fig. 12: das in Fig. 11 gezeigte Installationsgehäuse mit daran befestigten Halteelementen und zur Montage gegenüber dem Installationsgehäuse ausgerichteten Adaptern,
- Fig. 13: das in Fig. 12 gezeigt Installationsgehäuse mit den daran befestigten Halteelementen und Adaptern,
- Fig. 14: in einer perspektivischen Darstellung einen Ausschnitt einer Wand mit einer Wandausnehmung und einem darin angeordneten Installationsgehäuse,
- Fig. 15: den in Fig. 14 gezeigten Wandausschnitt in einer Blickrichtung in Tiefenrichtung der Wandausnehmung und
- Fig. 16: in einer perspektivischen Darstellung das in Fig. 13 gezeigte Installationsgehäuse mit einem teilweise in das Installationsgehäuse eingeschoben Einsatz.

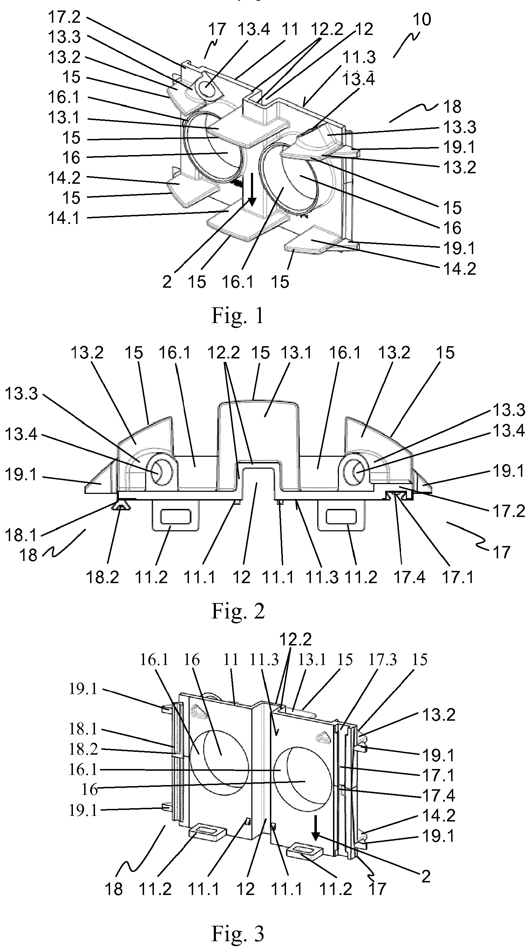

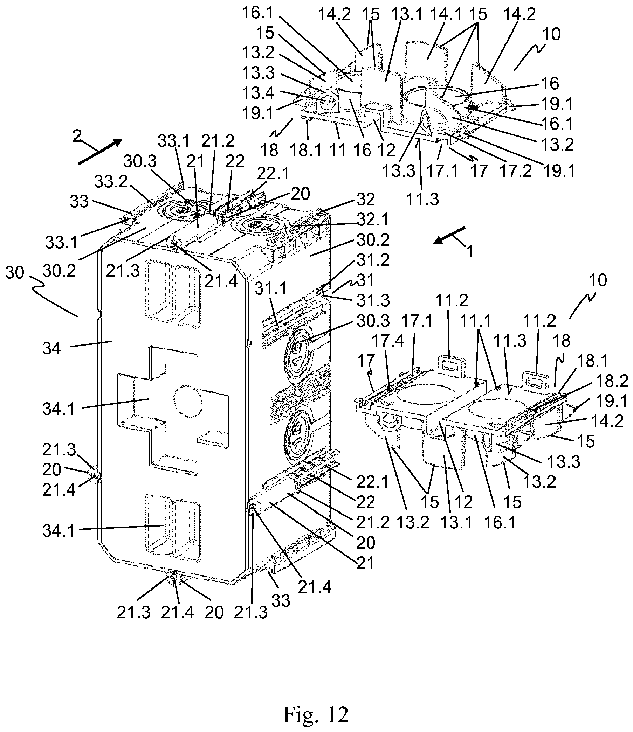

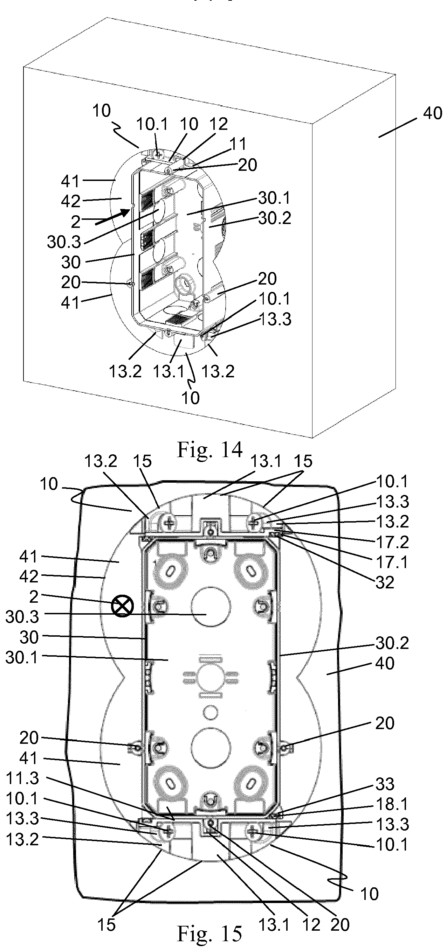

Fig. 1 zeigt in einer perspektivischen Darstellung mit Blick auf dessen Oberseite einen Adapter 10 zur Positionierung und Befestigung eines in Fig. 12 gezeigten Installationsgehäuses 30 in einer in Fig. 15 gezeigten Wandausnehmung 41 mit Montageelementen 13.3 und ersten Fixieransätzen 19.1.

Fig. 2 zeigt den in Fig. 1 gezeigten Adapter in einer Draufsicht.

Fig. 3 zeigt den in Fig. 1 gezeigten Adapter in einer perspektivischen Darstellung mit Blick auf die Unterseite.

Wie den Fig. 1 bis 3 zu entnehmen ist, weist der Adapter 10 ein Trägerelement 11 auf. Das Trägerelement 11 ist als flächiges Bauelement ausgeführt. Es bildet auf seiner Unterseite eine Anlagefläche 11.3 zur mittelbaren oder unmittelbaren Anlage des Installationsgehäuses 30 aus. Eine Tiefenrichtung 2 ist als Pfeil gekennzeichnet. Die Tiefenrichtung 2 bezieht sich auf die Ausrichtung des Adapters in der in Fig. 15 gezeigten Wandausnehmung 41. Sie verläuft in der Ebene des Trägerelements 11. Durch seine vorgegebene Einbaurichtung in der Wandausnehmung 41 ist ein vorderer Bereich bzw. eine Vorderseite des Adapters 10 definiert. Diese entspricht der Seite des Adapters 10, welche in der in Fig. 15 gezeigten Einbausituation in einer Wandausnehmung 41 zur Öffnung der Wandausnehmung 41 hin weist. In Tiefenrichtung 2 gegenüberliegend zu dem vorderen Bereich bzw. der Vorderseite ist entsprechend der hintere Bereich bzw. die Hinterseite des Adapters 10 angeordnet.

Im Mittenbereich des Trägerelements 11 ist eine Aufnahme 12 eingeformt. Die Aufnahme 12 ist als in Tiefenrichtung 2 ausgerichteter Kanal ausgebildet. Sie ist zur Unterseite des Adapters 10 hin und in und entgegen der Tiefenrichtung 2 geöffnet ausgeführt. Zur der der Anlagefläche 11.3 abgewandten Oberseite des Adapters 10 hin ist die Aufnahme 12 durch Wandelemente 12.2 begrenzt. Dazu sind beabstandet zueinander angeordnete Wandelemente 12.2 im Winkel zur Anlagefläche 11.3 ausgerichtet und längsseitig mit einem weiteren, die Aufnahme 12 nach oben abdeckenden Wandelement 12.2 verbunden.

Seitlich der Aufnahme 12 bildet das Trägerelement 11 zwei flache Bereiche aus. In diesen ist das Trägerelement 11 durch jeweils eine Kabeldurchführung 16 durchbrochen, wie dies insbesondere Fig. 1 und Fig. 3 entnommen werden kann. Zur Oberseite hin ist die Kabeldurchführung 16 durch eine zylinderförmige Kabelführung 16.1 eingefasst.

Wie insbesondere den Fig. 2 und 3 zu entnehmen ist, sind auf Seiten der Anlagefläche 11.3 Gleitführungen 17, 18 an das Trägerelement 11 angeformt. Die Gleitführungen 17, 18 sind entlang der Tiefenrichtung 2 ausgerichtet. Sie sind vorliegend als Schwalbenschwanzführungen ausgeführt. Die erste Gleitführung 17 ist als Führungsnut 17.1 ausgebildet. Dazu ist an das Trägerelement 11 eine im wesentlichen U-förmige Einformung 17.2 angeformt, welche die zur Anlagefläche 11.3 hin geöffnete Führungsnuten 17.1 bildet. Durch die zur Oberseite des Adapters 10 hin zurückgestellte, U-förmige Einformung 17.2 schließt die Führungsnut 17.1 in der Ebene der Anlagefläche 11.3 ab. Am vorderen und am hinteren Ende der Führungsnut 17.1 ist jeweils eine Aussparung 17.3 vorgesehen, in denen die Schwalbenschwanzführung ausgespart ist. Im Mittenbereich der Führungsnut 17.1 ist ein erster Anschlagansatz 17.4 angeformt, der in die Führungsnut 17.1 hineinragt.

Quer zur Tiefenrichtung 2 gegenüberliegend zu der ersten Gleitführung 17 ist die zweite Gleitführung 18 an das Trägerelement 11 angeformt. Die zweite Gleitführung 18 ist als Feder 18.1, vorliegend in Form einer Schwalbenschwanzführung, ausgebildet. Diese ragt über die Anlagefläche 11.3 hinaus. Im Mittenbereich der Feder 18.1 ist ein zweiter Anschlagansatz 18.2 an der Feder 18.1 angeformt. Der zweite Anschlagansatz 18.2 ist als Steg ausgebildet, welche die beiden im Winkel zueinander angeordneten Schenkel der Schwalbenschwanzführung verbindet.

Die Gleitführungen 17, 18 bilden Anschlusselemente zur Befestigung des Adapters 20 an dem Installationsgehäuse 30.

Wie insbesondere in Fig. 3 gezeigt ist, sind am hinteren Abschluss der Anlagefläche 11.3 Begrenzungselemente 11.2 im Winkel an das Trägerelement 11 angeformt. Die Begrenzungselemente 11.2 stehen über die Anlagefläche 11.3 über. Sie sind flächig ausgebildet und in Tiefenrichtung 2jeweils von einem Langloch durchbrochen.

Seitlich der Aufnahme 12 sind zwei Rastelemente 11.1 mit dem Trägerelement 11 verbunden, wie dies den Fig. 2 und 3 entnommen werden kann. Die auf beiden Seiten der Aufnahme 12 angeordneten Rastelement 11.1 ragen über die Anlagefläche 11.3 hinaus. Sie sind im hinteren Bereich des Adapters 10 angeordnet.

Zur Oberseite des Adapters 10 hin weisend sind Positionierlaschen 13.1, 13.2, 14.1, 14.2 an das Trägerelement 11 angeformt, wie diese insbesondere in Fig. 1 und Fig. 2 gezeigt sind. Die Positionierlaschen 13.1, 13.2, 14.1, 14.2 sind flächig ausgeführt. Ihre Ebenen sind quer zur Tiefenrichtung 2 ausgerichtet. Im vorderen und im hinteren Bereich des Adapters 10 sind jeweils drei Positionierlaschen 13.1, 13.2, 14.1, 14.2 quer zur Tiefenrichtung 2 beabstandet nebeneinander angeordnet. Dabei sind im Bereich der Aufnahme 12 jeweils eine mittige Positionierlasche 13.1, 14.1 und auf beiden Seiten davon jeweils eine äußere Positionierlasche 13.2, 14.2 vorgesehen. Die vorderen Positionierlaschen 13.1, 13.2 und die hinteren Positionierlaschen 14.1, 14.2 können jeweils in einer Ebene zueinander ausgerichtet sein.

Die mittigen Positionierlaschen 13.1, 14.1 umgreifen die Aufnahme 12. Sie sind mit den die Aufnahme 12 begrenzenden Wandelementen 12.2 sowie seitlich der Wandelemente 12.2 mit den ebenen Bereichen des Trägerelements 11 verbunden. Hierdurch wird das Trägerelement 11 im Bereich der mittigen Positionierlaschen 13.1,14.1 ausgesteift.

Die äußeren Positionierlaschen 13.2, 14.2 sind gegenüberliegend zu den Gleitführungen 17, 18 an das Trägerelement 11 angeformt. Dabei umfassen die der ersten Gleitführung 17 gegenüberliegenden äußeren Positionierlaschen 13.2, 14.2 deren U-förmige Einformung 17.2 abschnittsweise.

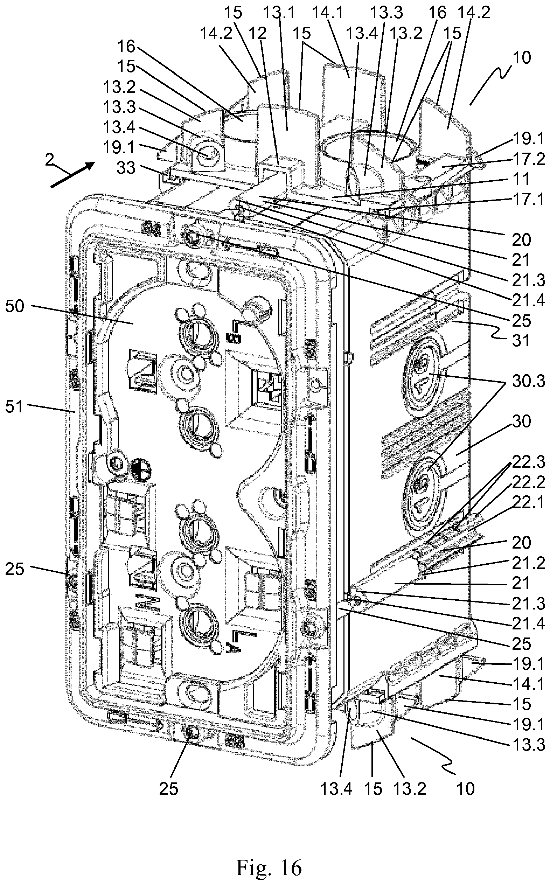

Gegenüberliegend zum Trägerelement 11 sind die Positionierlaschen 13.1, 13.2, 14.1, 14.2 von Anlegekanten 15 abgeschlossen. Die Anlegekanten 15 folgen vorzugsweise der Kontur einer Seitenwandung 42 der Wandausnehmung 41 im Bereich eines Befestigungsabschnitts, an den der Adapter 10 innerhalb einer Wandausnehmung 41 angelegt wird, wie dies insbesondere Fig. 16 zu entnehmen ist. In dem in Fig. 1 und Fig. 2 gezeigten Ausführungsbeispiel sind die Anlegekanten 15 quer zur Tiefenrichtung 2 zueinander benachbarter Positionierlaschen 13.1, 13.2, 14.1, 14.2 auf einem gleichen Radius zu einer gemeinsamen, in Tiefenrichtung 2 ausgerichteten Mittelachse verlaufend angeordnet. Die mittigen Positionierlaschen 13.1, 14.1 erheben sich weiter über das Trägerelement 11 als die äußeren Positionierlaschen 13.2, 14.2.

Der Vorderseite des Adapters 10 zugewandt sind die beiden Montageelemente 13.3 angeordnet. Die Montageelemente 13.3 sind mit dem Trägerelement 11 und jeweils mit einer der vorderen äußeren Positionierlaschen 13.2 verbunden. Sie sind von jeweils einer Schraubenaufnahme 13.4 durchdrungen, welche auch durch die mit den Montageelementen 13.3 verbundenen vorderen äußeren Positionierlaschen 13.2 geführt sind. Gegenüber der Tiefenrichtung 2 sind die Schraubenaufnahmen 13.4 schräg nach außen weisend ausgerichtet.

An den in Tiefenrichtung 2 verlaufenden äußeren Kanten des Trägerelements 11 sind die ersten Fixieransätze 19.1 angeordnet, wie dies den Fig.1 bis 3 zu entnehmen ist. Die ersten Fixieransätze 19.1 sind jeweils mit dem Trägerelement 11 und einem der äußeren Positionierlaschen 13.2, 14.2 einstückig verbunden. Sie sind flächig ausgebildet und in der Ebene der jeweils benachbarten äußeren Positionierlaschen 13.2, 14.2 ausgerichtet. Die Gestaltung der Fixieransätze 19.1 kann beispielsweise so sein, dass sie sich mit steigendem Abstand zu den äußeren Positionierlaschen 13.2, 14.2 entlang einer abgerundet verlaufenden Kurve verjüngen und in einem äußeren, abgeflachten Abschluss enden.

Der Adapter 10 ist vorzugsweise aus einem Kunststoff hergestellt. Die beschriebenen Baugruppen des Adapters 10 sind dabei vorzugsweise einstückig miteinander verbunden.

Die Aufnahme 12 führt mit ihren im Winkel zu der Anlagefläche 11.3 angeordneten Wandelementen 12.2 zu einer Versteifung des Trägerelements 11. Dadurch wird bei einwirkenden Kräften die Durchbiegung des Adapters 10 insbesondere entlang der Tiefenrichtung 2 zumindest verringert. Die Gleitführungen 17, 18 führen durch die U-förmige Einformung 17.2 und die angeformte Feder 18.1 am seitlichen Rand des Trägerelements 11 ebenfalls zu einer in gleicher Richtung wirkenden Versteifung des Adapters 10. Quer zur Tiefenrichtung 2 führen die Positionierlaschen 13.1, 13.2, 14.1, 14.2 zu einer Versteifung des Trägerelements 11. Dabei verhindern die mittigen Positionierlaschen 13.1, 14.1, dass sich die Aufnahme 12 bei einwirkenden Kräften aufbiegt oder ihre äußeren Wandelemente 12.2 aufeinander zu gedrückt werden. Die äußeren Positionierlaschen 13.2, 14.2 stabilisieren das Trägerelement 11 im Bereich der Gleitführungen 17, 18. Damit ist eine sichere Verbindung des Adapters 10 zu einem Installationsgehäuse 30 sichergestellt. Die über die Ebene des Trägerelements 11 ragenden, zylinderförmigen Kabelführungen 16.1 bewirken eine Versteifung der ebenen Bereiche des Trägerelements 11 seitlich der Aufnahme 12. Gleichzeitig ermöglichen die Kabeldurchführung 16 mit den Kabelführungen 16.1, das Kabel durch den Adapter 10 zu dem Installationsgehäuse 30 geführt werden können, ohne dass diese an scharfen Kanten vorbeigeführt werden. Eine Beschädigung der Kabel kann so sicher vermieden werden. Die mit dem Trägerelement 11 und den vorderen äußeren Positionierlaschen 13.2 verbundenen Montageelemente 13.3 tragen ebenfalls zur Versteifung des Trägerelements 11 und damit des Adapters 10 bei. Der Adapter 10 weist daher auch als kostengünstig herstellbares Kunststoffbauteil mit flächig ausgebildetem Trägerelement 11 eine hohe mechanische Stabilität auf.

Durch die Anordnung und Ausrichtung der Positionierlaschen 13.1, 13.2, 14.1, 14.2 und ihre Ausführung als Kunststoffbauteil können ihre abschließenden Anlegekanten 15 in Tiefenrichtung 2 federelastisch ausgelenkt werden.

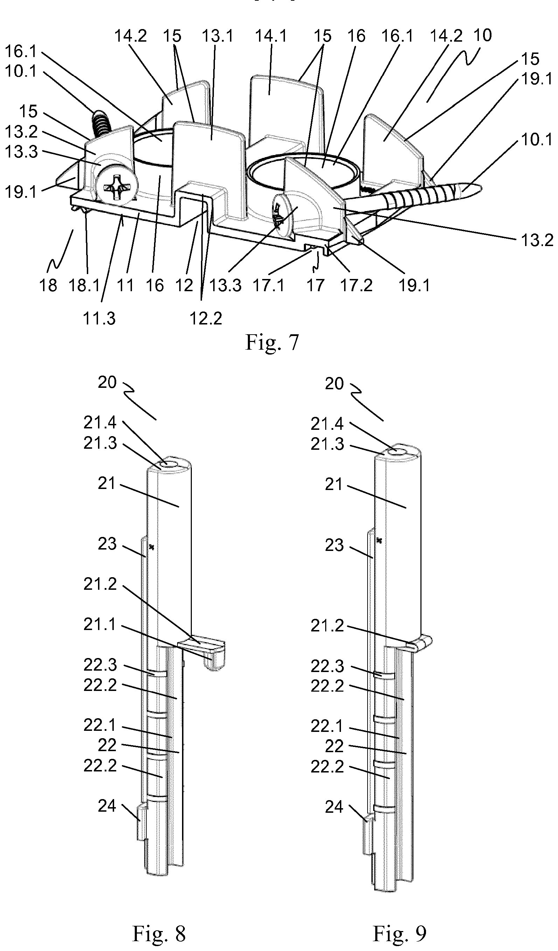

Die Montageelemente 13.3 ermöglichen durch ihre Schraubenaufnahmen 13.4 die Befestigung des Adapters 10 mittels in Fig. 7 gezeigten Schrauben 10.1 in einer Wandausnehmung 41.

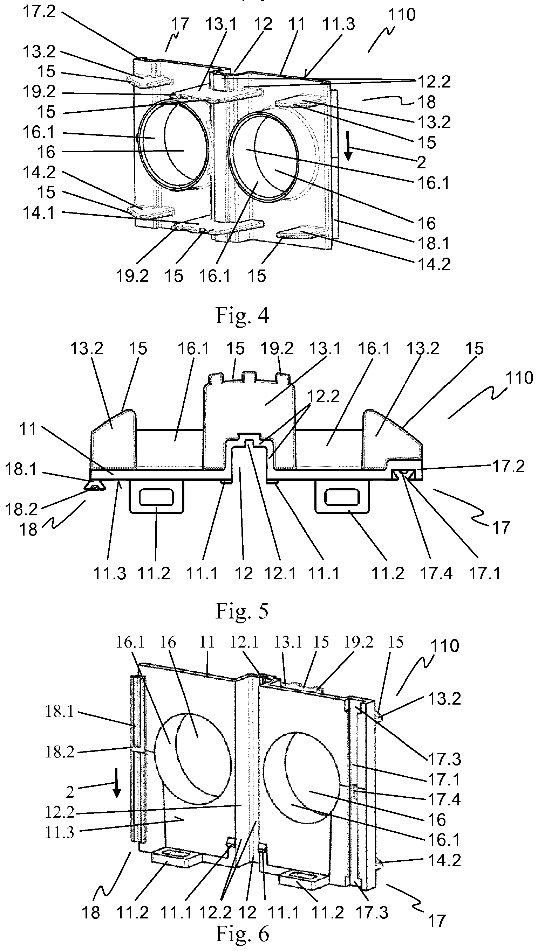

Fig. 4 zeigt in einer perspektivischen Darstellung mit Blick auf die Oberseite einen zweiten Adapter 110 zur Positionierung und Befestigung eines Installationsgehäuses 30 mit zweiten Fixieransätzen 19.2. Fig. 5 zeigt den in Fig. 4 gezeigten zweiten Adapter 110 in einer Draufsicht und Fig. 6 den in Fig. 4 gezeigten zweiten Adapter 110 in einer perspektivischen Darstellung mit Blick auf die Unterseite. Der in den Fig. 4 bis 6 gezeigte zweite Adapter 110 entspricht im Wesentlichen dem in den Fig. 1 bis 3 gezeigten Adapter 10, sodass nachfolgend nur auf die abweichenden Merkmale eingegangen und ansonsten auf die Beschreibung zu den Fig. 1 bis 3 verwiesen wird.

Im Gegensatz zu dem in den Fig. 1 bis 3 gezeigten Adapter 10 weist der in den Fig. 4 bis 6 gezeigt zweite Adapter 110 keine Montageelemente 13.3 und keine ersten Fixieransätze 19.1 auf. Dafür sind an den mittigen Positionierlaschen 13.1, 14.1 zweite Fixieransätze 19.2 angeformt, welche über deren Anlegekanten 15 hervorstehen. In das die Aufnahme 12 nach oben begrenzende Wandelement 12.2 ist eine in Tiefenrichtung 2 verlaufende Kerbe 12.1 eingeformt.

Bei einer Montage des zweiten Adapters 110 in einer Wandausnehmung 41 verkrallen sich die zweiten Fixieransätze 19.2 in einer in Fig. 15 gezeigten Seitenwandung 42 der Wandausnehmung 41. Auf eine zusätzliche Befestigung mittels Schrauben 10.1 kann so verzichtet werden. Die Kerbe 12.1 führt zu einer zusätzlichen Versteifung des Trägerelements 11 und damit des zweiten Adapters 110.

Fig. 7 zeigt in einer perspektivischen Darstellung den in Fig. 1 gezeigten Adapter 10 mit den eingesetzten Schrauben 10.1. Die Schrauben 10.1 sind durch die Schraubenaufnahmen 13.4 der Montageelemente 13.3 und der vorderen äußeren Positionierlaschen 13.2 geführt. Durch die schräge Anordnung der Schraubenaufnahmen 13.4 sind die Schrauben 10.1 mit ihren Spitzen nach außen gerichtet und können entsprechend in die Seitenwandung 42 einer Wandausnehmung 41 eingeschraubt werden. Dabei sind die zur Vorderseite des Adapters 10 hin ausgerichteten Schraubenköpfe von außen gut zugängig.

Fig. 8 zeigt in einer perspektivischen Darstellung ein Halteelement 20 mit geöffnetem Verschluss 21.1. Das Halteelement 20 ist als längliches Kunststoff-Spritzgussbauteil ausgeführt. Es weist entlang seiner Längserstreckung einen Hülsenabschnitt 21 und einen anschließenden Verlängerungsabschnitt 22 auf. Der Hülsenabschnitt 21 umschließt eine entlang der Längserstreckung ausgerichtete, als Hohlraum ausgebildete Schraubaufnahme. Er ist zu seinem vorderen Abschluss hin von einem Deckel 21.3 abgeschlossen. Der Deckel 21.3 ist umlaufend mit dem Mantel des Hülsenabschnitts 21, vorzugsweise einstückig, verbunden. In den Deckel 21.3 ist eine Positioniermarke 21.4 in Form einer Mulde eingeformt. Gegenüberliegend zu dem Deckel 21.3 ist der Hülsenabschnitt 21 offen.

Der Verlängerungsabschnitt 22 bildet eine durch Wandabschnitte 22.2 eingefasste, stirnseitig und gegenüberliegend zu einem Führungselement 23 offene Rinne 22.1 aus. Sie steht in geradliniger Verbindung zu der, vom Hülsenabschnitt 21 gebildeten Schraubaufnahme. Der Durchmesser der Rinne 22.1 als der innere Abstand der Wandabschnitte 22.2 zueinander entspricht dem Durchmesser der Schraubaufnahme des Hülsenabschnitts 21. Das als Führungsschiene ausgebildete Führungselement 23 ist an einer abgeflachten Seite des Hülsenabschnitts 21 und des Verlängerungsabschnitts 22 angeformt. Auf Seiten des Verlängerungsabschnittes 22 schließt sich dem Führungselement 23 ein gegenüber dem Führungselement 23 in Umfangsrichtung des Halteelements 20 verbreiterter Halteansatz 24 an. An den Wandabschnitten 22.2 des Verlängerungsabschnitts 22 sind in Längsrichtung des Halteelements 20 zueinander beabstandet angeordnete, in Umfangsrichtung des Halteelements 20 verlaufende Versteifungselemente 22.3 angeformt.

Der Verschluss 21.1 ist über ein Filmscharnier 21.2 mit dem Hülsenabschnitt 21 an dessen dem Verlängerungsabschnitt 22 zugewandten Ende verbunden. Dabei ist das Filmscharnier 21.2 gegenüberliegend zu dem Führungselement 23 angeordnet.

Fig. 9 zeigt das in Fig. 8 gezeigte Halteelement 20 mit geschlossenem Verschluss 21.1. Dazu ist das Filmscharnier 21.2 umgebogen und der Verschluss 21.1 in die dem Verlängerungsabschnitt 22 zugewandte Öffnung des Hülsenabschnitts 21 eingesteckt.

Die dem Verlängerungsabschnitt 22 zugewandte Öffnung des Hülsenabschnitts 21 ermöglicht die Herstellung des Halteelements 20 als Spitzgussteil. Dabei wird während des Spritzgussprozesses ein Schieber entlang der Rinne 22.1 des Verlängerungsabschnitts 22 in den Hülsenabschnitt 21 eingeführt und deren Schraubaufnahme, vorzugsweise für eine selbstfurchende Schraube, ausgeformt. Der Durchmesser der Rinne 22.1 ist daher vorteilhaft gleich dem Durchmesser der Schraubaufnahme des Hülsenabschnitts 21 gewählt. Es ist auch denkbar, den Durchmesser der Rinne 22.1 größer als den Durchmesser der Schraubaufnahme des Hülsenabschnitts 21 auszubilden.

In der Verwendung des Halteelements 20 wird die Schraubaufnahme des Hülsenabschnitts 21 durch den Verschluss 21.1 verschlossen, sodass kein Beton oder Mörtel rückseitig eindringen kann. Es ist daher von Vorteil, wenn das Halteelement 20 mit bereits durch den Verschluss 21.1 verschlossenem Hülsenabschnitt 21 ausgeliefert wird. Die Verbindung des Verschlusses 21.1 mittels des Filmscharniers 21.2 am rückseitigen Ende des Hülsenabschnitts ermöglicht in einfacher Weise das beispielsweise automatisierte Einführen des Verschlusses in die zugeordnete Öffnung des Hülsenabschnitts 21. Vorteilhaft ist dazu das Filmscharnier 21.2 derart angeordnet, dass sich sein Knickverlauf quer zur Längserstreckung des Halteelements ausbildet. Der Verschluss 21.1 wird dadurch beim Knicken des Filmscharniers 21.2 zu der Öffnung der Schraubaufnahme geleitet. Unterstützend wird der Verschluss 21.1 seitlich durch die Wandabschnitte 22.2 der Rinne 22.1 geführt. Daher sind der Verschluss 21.1, das Filmscharnier 21.2 und/oder ein zwischen dem Verschluss 21.1 und dem Filmscharnier 21.2 vorgesehener Übergangsabschnitt quer zur Längserstreckung des Halteelements 20 entsprechend oder geringfügig schmäler als der Abstand der gegenüberliegend angeordneten Wandabschnitte 22.2 der Rinne 22.1 dimensioniert. Durch diese Ausbildung erfolgt die gewünschte Führung des Verschlusses 21.1 mit geringem seitlichem Versatz.

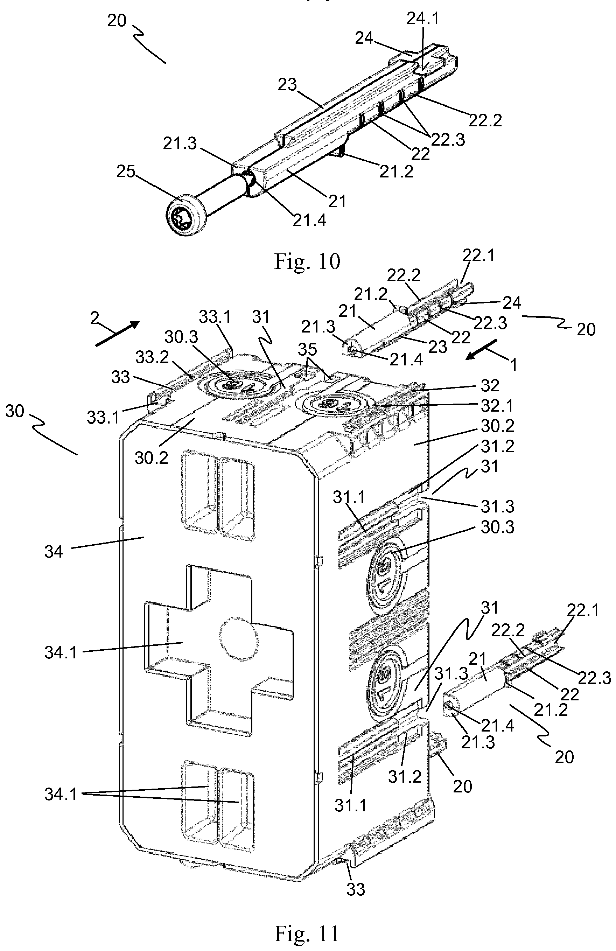

Fig. 10 zeigt in einer perspektivischen Darstellung das in Fig. 8 gezeigte Halteelement 20 mit einer Befestigungsschraube 25. Die Befestigungsschraube 25 (vorzugsweise eine selbstfurchende Schraube) ist mit ihrer Spitze auf die Positioniermarke 21.4 im Deckel 21.3 des Halteelements 20 ausgerichtet. Sie kann so in den Hülsenabschnitt 21 eingeschraubt werden, wobei sie den Deckel 21.3 durchstößt.

Die in Fig. 10 gewählte Perspektive zeigt das Halteelement 20 von seiner abgeflachten Seite. Das Führungselement 23 ist entlang der Längserstreckung des Halteelements 20 ausgerichtet mit dessen abgeflachten Seite einstückig verbunden. Sie ist in Form einer Feder eine Schwalbenschwanzführung ausgebildet. Bezogen auf den dem Deckel 21.3 zugewandten Ende des Hülsenabschnitts 21 ist das Führungselement 23 zurückgesetzt. Gegenüberliegend geht das Führungselement 23 in den Halteansatz 24 über. Der Halteansatz 24 ist quer zur Längserstreckung des Halteelements 20 gegenüber dem Führungselement 23 verbreitert ausgebildet. Er weist seitlich des Führungselements 23 zwei zum Hülsenabschnitt 21 hin ausgerichtete Anlaufschrägen 24.1 auf.

Die Versteifungselemente 22.3, das Führungselement 23 und der Halteansatz 24 bewirken eine Versteifung des Halteelements 20, insbesondere im Bereich der ausgebildeten Rinne 22.1.

Der Hülsenabschnitt 21 ist gegenüberliegend zu seinem Deckel 21.3 von dem in Fig. 8 gezeigten Verschluss 21.1 verschlossen, so dass lediglich das abgebogene Filmscharnier 21.2 zu erkennen ist.

Fig. 11 zeigt in einer perspektivischen Darstellung das Installationsgehäuse 30 mit einem aufgesetzten Gehäusedeckel 34 und zur Befestigung gegenüber dem Installationsgehäuse 30 ausgerichteten Halteelementen 20.

Das Installationsgehäuse 30 ist als Kunststoffbauteil hergestellt. Es weist eine umlaufende Gehäusewand 30.2 auf und ist rückseitig von einem in Fig. 14 gezeigten Gehäuseboden 30.1 abgeschlossen. Die zur Vorderseite des Installationsgehäuses 30 weisende Gehäuseöffnung ist von dem Gehäusedeckel 34 verschlossen. In den Gehäusedeckel 34 sind Geräteaufnahmen 34.1 eingeformt. Sie dienen beispielsweise der Aufnahme von nicht gezeigten Messgeräten zur Überprüfung der Ausrichtung des Installationsgehäuses 30.

Das Installationsgehäuse 30 ist vorliegend rechteckig als Zweiergehäuse ausgebildet. Installationsgehäuse 30 werden in unterschiedlichen Größen verwendet. Dabei erfolgt eine Erweiterung oder eine Größenreduzierung jeweils in einem vorgegebenen Rastermaß. Die kleinste Einheit bilden quadratische Einzelgehäuse, bei denen die vier Wandabschnitte der Gehäusewand 30.2 im kleinsten Rastermaß gleich dimensioniert ausgebildet sind. Es können drei- oder vielfach-Installationsgehäuse 30 vorgesehen sein, die jeweils um ein weiteres Rastermaß zueinander verlängert sind. Ebenso kann das Installationsgehäuse 30 in beiden Dimensionen quer zur Tiefenrichtung 2 in dem vorgegebenen Rastermaß erweitert werden.

An den Gehäusewänden 30.2 sind Kabeldurchbrüche 30.3 angelegt. Diese weisen umlaufende Sollbruchstellen auf und können in bekannter Weise mit geringer Krafteinwirkung leicht geöffnet werden. Kabel können durch die derart freigestellten Kabeldurchbrüche 30.3 in das Innere des Installationsgehäuses 30 geführt werden. Die an den schmalen Abschnitten der Gehäusewand 30.2 angeordneten Kabeldurchbrüche 30.3 sind gleich weit zueinander beabstandet wie die Kabeldurchführungen 16 der in den Fig. 1 bis 7 gezeigten Adapter 20.

Entlang der Kanten der zwischen den Wandabschnitten der Gehäusewand 30.2 gebildeten Ecken sind Federelemente 32 und Federaufnahmen 33 angeformt. Die Federelemente 32 und die Federaufnahmen 33 sind entlang ihrer Längserstreckung in Tiefenrichtung 2 ausgerichtet. Sie sind zu den kurzen Wandabschnitten des Installationsgehäuses 30 hin ausgerichtet. Dabei sind entlang jedes kurzen Wandabschnitts sowohl ein Federelement 32 wie auch eine Federaufnahme 33 vorgesehen. Entlang der langen Seite des Installationsgehäuses 30 ist dem Federelement 32 eine Federaufnahme 33 und der Federaufnahme 33 ein Federelement 32 gegenübergestellt. Umlaufend wechseln sich demnach Federelemente 32 und Federaufnahmen 33 ab.

Die Federelemente 32 und die Federaufnahmen 33 sind korrespondierend zu der ersten und der zweiten Gleitführung 17, 18 der in den Fig. 1 bis 7 gezeigten Adapters 10, 110 ausgebildet. Sie sind entsprechend als Schwalbenschwanzführung ausgeführt. Bezogen auf den vorderen Rand des Installationsgehäuses 30 sind die Federelemente 32 und die Federaufnahmen 33 zurückgesetzt. Im Mittenbereich des Federelements 32 ist ein erster Gegenanschlag 32.1 angeformt. Der Gegenanschlag 32.1 ist als die beiden im Winkel zueinander stehenden Schenkel der Schwalbenschwanzführung verbindender Steg ausgeführt. Er korrespondiert demnach mit dem ersten Anschlagansatz 17.4, wie er in der Führungsnut 17.1 der ersten Gleitführung 17 des Adapters 10 vorgesehen ist. Die Federaufnahme 33 weist an ihrem vorderen und an ihrem hinteren Ende jeweils eine Aussparung 33.1 auf, in welchen die Flanken der Schwalbenschwanzführung ausgespart sind. Im Mittenbereich der Federaufnahme 33 ist ein zweiter Gegenanschlag 33.2 angeformt. Dieser korrespondiert mit dem zweiten Anschlagansatz 18.2, wie er an der Feder 18.1 der zweiten Gleitführung 18 des Adapters 10 vorgesehen ist.

In die Gehäusewand 30.2 sind Halteelementaufnahmen 31 eingeformt. Diese weisen jeweils eine in Tiefenrichtung 2 ausgerichtete Führungselementaufnahme 31.1 auf. Der Führungselementaufnahme 31.1 sind in Tiefenrichtung 2 eine Halteansatzaufnahme 31.2 und eine Zugangsöffnung 31.3 nachgeordnet. Zur Vorderseite des Installationsgehäuses 30 hin ist die Führungselementaufnahme 31.1 geschlossen.

An den kurzen Seiten des Installationsgehäuses 30 ist jeweils eine Halteelementaufnahme 31 vorgesehen. Diese ist mittig an den jeweiligen kurzen Wandabschnitt angeordnet. An den langen Seiten des Installationsgehäuses 30 sind jeweils zwei Halteelementaufnahmen 31 eingeformt. Diese sind gleich weit zu den Ecken des Installationsgehäuses 30 beabstandet wie die Halteelementaufnahmen 31 an den kurzen Wandabschnitten. Die Halteelementaufnahmen 31 sind demnach in dem vorgegebenen Rastermaß des Installationsgehäuses 30 angeordnet.

Die Führungselementaufnahme 31 ist korrespondierend zu dem Führungselement 23 des Halteelements 20 ausgebildet. Sie bildet somit die Aufnahme einer Schwalbenschwanzführung. Die Halteansatzaufnahme 31.2 ist korrespondierend zu dem Halteansatz 24 des Halteelements 20 ausgebildet. Sie bietet Raum zur Aufnahme des Halteansatzes 24. Die Zugangsöffnung 31.3 ist in Verlängerung der Führungselementaufnahme 31.1 angeordnet und gewährt entgegen der Tiefenrichtung 2 Zugang zu der Halteansatzaufnahme 31.2.

Seitlich der Halteansatzaufnahmen 31.2 der Halteelementaufnahmen 31, wie sie zwischen dem zur Befestigung eines Adapters 10 vorgesehenen Federelement 32 und Federaufnahme 33 angeordnet sind, sind Gegenrastelemente 35 als Einbuchtungen in die Gehäusewand 30.2 eingeformt. Diese sind korrespondierend zu den Rastelementen 11.1 an dem Adapter 10, wie sie in den Fig. 2, 3, 5, 6 gezeigt sind, ausgebildet und angeordnet.

Die Halteelemente 20 sind zur Befestigung an dem Installationsgehäuse 30 ausgerichtet seitlich des Installationsgehäuses 30 angeordnet. Dazu sind die Halteelemente 20 entlang ihrer Längserstreckung in Tiefenrichtung 2 ausgerichtet und gegenüber der Zugangsöffnungen 31.3 der Halteelementaufnahmen 31 positioniert. Die zum Verlängerungsabschnitt 22 hin ausgerichteten Öffnungen der Hülsenabschnitte 21 sind durch die jeweiligen Verschlüsse 21.1 verschlossen.

Zur Befestigung an dem Installationsgehäuse 30 wird ein Halteelemente 20 mit seinem vorderen abgeflachten Bereich, in den das zurückgesetzte Führungselement 23 nicht geführt ist, auf den hinteren Rand der Gehäusewand 30.2 aufgelegt, sodass das Führungselement 23 zu der Zugangsöffnung 31.3 und der Führungselementaufnahme 31.1 hin ausgerichtet ist. Anschließend wird das Halteelement 20 entlang einer Einschubrichtung 1, die entgegen der Tiefenrichtung 2 ausgerichtet ist, mit seinem Führungselement 23 in die Führungselementaufnahme 31.1 der Halteelementaufnahme 31 des Installationsgehäuses 30 eingeschoben. Dazu wird das Führungselement 23 zunächst durch die Zugangsöffnung 31.3 und die anschließende Halteansatzaufnahme 31.2 geführt. Erreicht der Halteansatz 24 den Rand des Installationsgehäuses 30, so liegt er mit seinen Anlaufschrägen 24.1 an der zwischen der Gehäusewand 30.2 und dem Gehäuseboden 30.1 ausgebildeten Kante an. Beim weiteren Einschieben des Führungselements 23 des Halteelements 20 in die Führungselementaufnahme 31.1 der Halteelementaufnahme 31 wird das aus elastischem Kunststoff hergestellte Halteelement 20 im Bereich seines Verlängerungsabschnitts 22 durch Eingriff der Anlaufschrägen 24.1 an der Gehäusekante ausgelenkt. Dadurch kann das Halteelement 20 soweit in die Halteelementaufnahme 31 eingeschoben werden, bis der Halteansatz 24 in die Halteansatzaufnahme 31.2 einrastet, wobei der Verlängerungsabschnitt 22 zurückstellt. Durch den Eingriff des Halteansatzes 24 in der Halteansatzaufnahme 31.2 ist das Halteelement 20 in und entgegen der Einschubrichtung 1 und damit in und entgegen der Tiefenrichtung 2 an dem Installationsgehäuse 30 blockiert. Quer zur Tiefenrichtung 2 ist das Halteelement 20 durch Eingriff seines Führungselements 23 in die Führungselementaufnahme 31.1 der Halteelementaufnahme 31 gehalten. Fig. 12 zeigt das in Fig. 11 gezeigte Installationsgehäuse 30 mit daran befestigten Halteelementen 20 und zur Montage gegenüber dem Installationsgehäuse 30 ausgerichteten Adaptern 10. Die Halteelemente 20 sind, wie zu Fig. 11 beschrieben, mit ihren Führungsschienen 23 auf die Halteelementaufnahmen 31 aufgeschoben und dadurch mit dem Installationsgehäuse 30 verbunden. Sie sind entlang der Tiefenrichtung 2 derart ausgerichtet, dass sie mit ihren längsseitigen Enden mit der Gehäusewand 30.2 und damit mit der Vorder- und der Rückseite des Installationsgehäuses 30 abschließen. Der Deckel 21.3 des Hülsenabschnitts 21 mit seiner Positioniermarke 21.4 ist der Vorderseite des Installationsgehäuses 30 zugewandt.

An dem Installationsgehäuse 30 sind vorliegend vier Halteelemente 20 befestigt. Dabei ist an jedem Wandabschnitt der Gehäusewand 30.2 ein Halteelement 20 vorgesehen. An den langen Wandabschnitten sind die Halteelemente 20 in die unteren Halteelementaufnahmen 31 eingeschoben. Die oberen Halteelementaufnahmen 31 sind frei. Es ist jedoch auch denkbar, alternativ oder zusätzlich zu den unteren Halteelementaufnahmen 31 an den oberen Halteelementaufnahmen 31 Halteelemente 20 zu befestigen.

Den kurzen Wandabschnitten des Installationsgehäuses 30 ist jeweils ein Adapter 10 zugeordnet. Diese sind mit ihren Anlageflächen 11.3 einander zugewandt ausgerichtet. Gegenüber dem Installationsgehäuse 30 sind die Adapter 10 derart positioniert, dass ihre Gleitführungen 17, 18 entlang der Tiefenrichtung 2 bzw. der Einschubrichtung 1 zu dem jeweiligen Federelement 32 bzw. der jeweiligen Federaufnahme 33 des Installationsgehäuses 30 fluchten. In dieser Position der Adapter 10 sind deren Aufnahmen 12 zu den zwischen den Federelementen 32 und den Federaufnahmen 33 des Installationsgehäuses 30 angeordneten Halteelemente 20 hin ausgerichtet.

Zur Befestigung eines Adapters 10 an dem Installationsgehäuse 30 wird er entlang der Einschubrichtung 1 auf das Installationsgehäuse 30 aufgeschoben. Dazu wird der Adapter 10 zunächst mit dem vorderen Ende seiner Anlagefläche 11.3 entlang der rückseitigen Kante der Gehäusewand 30.2 des Installationsgehäuses 30 aufgelegt. Wie bereits zu Figur. 3 beschrieben, ist die Feder 18.1 der zweiten Gleitführung 18 des Adapters 10 gegenüber der vorderen Kante des Trägerelements 11 zurückgesetzt. Die Schwalbenschwanzführung der Führungsnut 17.1 der ersten Gleitführung 17 des Adapters 10 ist in Ihrem vorderen Bereich durch die Aussparung 17.3 ausgespart. Der Adapter 10 kann somit mit dem vorderen Bereich seines Trägerelements 11 an die Gehäusewand 30.2 des Installationsgehäuses 30 angelegt werden, wobei das vordere Ende der Feder 18.1 des Adapters 10 in der Aussparung 33.1 der Federaufnahme 33 am Installationsgehäuse 30 und das Federelement 32 des Installationsgehäuses 30 mit seinem rückseitigen Ende in der Aussparung 17.3 der Führungsnut 17.1 am Adapter 10 eingeführt sind. Das rückseitige Ende des Verlängerungsabschnitts 22 des Halteelements 20 ist in dem vorderen Bereich der Aufnahme 12 des Adapters 10 positioniert. Der derart an das Installationsgehäuse 30 angelegte Adapter 10 kann jetzt entlang der Einschubrichtung 1 auf das Installationsgehäuse 30 aufgeschoben werden. Dabei gleitet das Federelement 32 des Installationsgehäuses 30 in die Führungsnut 17.1 der ersten Gleitführung 17 des Adapters 10. Gleichzeitig wird die Feder 18.1 der zweiten Gleitführung 18 des Adapters 10 in die Federaufnahme 33 am Installationsgehäuse 30 eingeschoben. Die Aufnahme 12 des Adapters 10 wird über das Halteelement 20 geführt.

Der Adapter 10 wird so lange in Einschubrichtung 1 auf das Installationsgehäuse 30 aufgeschoben, bis die Begrenzungselemente 11.2 an der Rückseite des Installationsgehäuses 30 anliegen. Der Stellweg des Adapters 10 in Einschubrichtung 1 ist auch durch den Eingriff des ersten Anschlagansatzes 17.4 der ersten Gleitführung 17 des Adapters 10 an dem ersten Gegenanschlag 32.1 des Federelements 32 an dem Installationsgehäuse 30 bzw. durch Eingriff des zweiten Anschlagansatzes 18.2 der Feder 18.1 der zweiten Gleitführung 18 des Adapters 10 an dem zweiten Gegenanschlag 33.2 der Federaufnahme 33 an dem Installationsgehäuse 30 begrenzt. Die seitlich der Aufnahme 12 an dem Adapter 10 angeordneten Rastelement 11.1, wie sie in den Fig. 2 und 3 gezeigt sind, greifen in die Gegenrastelement 35 am Installationsgehäuse 30 ein. Dadurch ist eine Bewegung des Adapters 10 in Tiefenrichtung 2 blockiert.

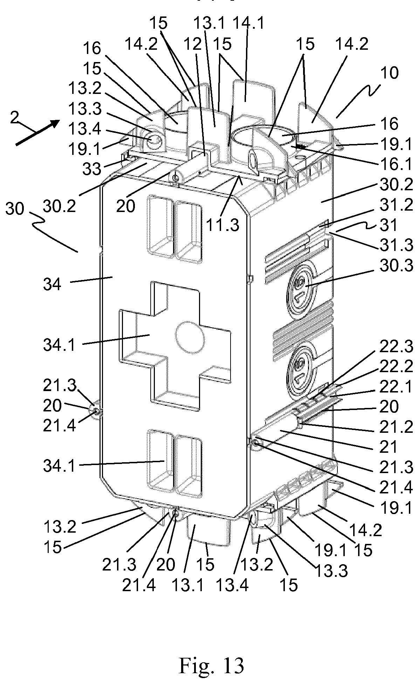

Fig. 13 zeigt das in Fig. 12 gezeigt Installationsgehäuse 30 mit den daran befestigten Halteelementen 20 und Adaptern 10.

Die Halteelemente 20 sind, wie zu den Fig. 11 und 12 beschrieben, auf die Halteelementaufnahmen 31 des Installationsgehäuses 30 aufgeschoben und dadurch mit dem Installationsgehäuse 30 verbunden. An den kurzen Wandabschnitten ist gegenüberliegend je ein Adapter 10 mit dem Installationsgehäuse 30 verbunden. Die Adapter 10 sind, wie zu Fig. 12 dargelegt, bis zum Anschlag auf das Installationsgehäuse 30 aufgeschoben und mit diesem verbunden. Sie liegen mit ihren Anlageflächen 11.3 an der Gehäusewand 30.2 des Installationsgehäuses 30 an. In ihrer Endposition sind die Adapter 10 mit ihren vorderen Abschlüssen zurückgesetzt gegenüber dem vorderen Abschluss des Installationsgehäuses 30 angeordnet. Die im Bereich der Adapter 10 angeordneten Halteelemente 20 sind somit in ihrem hinteren Abschnitt mit dem Verlängerungsabschnitt 22 von der Aufnahme 12 des jeweils Adapters 10 umfasst. Die Kabeldurchführungen 16 der Adapter 10 sind in der Endposition der Adapter 10 gegenüberliegend zu den in Figur. 11 gezeigten Kabeldurchbrüchen 30.3 an den kurzen Seiten der Gehäusewand 30.2 angeordnet. Kabel können so von außen durch die Kabeldurchführung 16 und die Kabeldurchbrüche 30.3 in das Innere des Installationsgehäuses 30 geführt werden.

Es ist jeweils ein Adapter 10 an den kurzen Seiten der Gehäusewand 30.2 vorgesehen. Für größere Installationsgehäuse 30, beispielsweise für quadratische Installationsgehäuse 30 in mehrfachem Rastermaß, können auch mehr als zwei Adapter 10 vorgesehen sein.

In der in Fig. 13 gezeigten Ausbaustufe kann das Installationsgehäuse 30 mit den Adaptern 10 in die Wandausnehmung 41, wie sie in Fig. 14 gezeigt ist, eingesetzt werden.

Fig. 14 zeigt in einer perspektivischen Darstellung einen Ausschnitt einer Wand 40 mit der Wandausnehmung 41 und einem darin angeordneten Installationsgehäuse 30.

Fig. 15 zeigt den in Fig. 14 gezeigten Wandausschnitt in einer Blickrichtung in Tiefenrichtung 2 der Wandausnehmung 41.

Die Wand 40 ist vorliegend als Ziegelwand ausgeführt. Das Installationsgehäuse 30 mit den Adaptern 10 kann jedoch auch in eine Wandausnehmung 41 einer Wand 40 aus Beton oder aus anderen Materialien eingesetzt werden.

Die Wandausnehmung 41 ist vorliegend aus zwei nebeneinander angeordneten, kreisrunden Bohrungen, welche sich teilweise überlappen, gebildet. Dabei ist der Abstand der Bohrung in vorgegebenem Rastermaß gewählt. Auch der Durchmesser der Bohrungen ist vorgegeben, sodass entsprechend standardisierte Installationsgehäuse 30 mit Adaptern 10 in die Wandausnehmung 41 eingesetzt werden können.

Das Installationsgehäuse 30 ist, zusammen mit den daran befestigten Halteelementen 20 und Adaptern 10, entlang der Tiefenrichtung 2 in die Wandausnehmung 41 eingeschoben. Die an den äußeren Enden der Positionierlaschen 13.1, 13.2, 14.1, 14.2 vorgesehenen Anlegekanten 15 folgen der Kontur der Seitenwandung 42 der Wandausnehmung 41. Sie sind dazu vorliegend entlang eines Radius um eine gemeinsame, in Tiefenrichtung 2 ausgerichtete Mittelachse angeordnet.

Der Abstand der Anlegekante 15 der Positionierlaschen 13.1, 13.2, 14.1, 14.2 gegenüber dem Trägerelement 11 kann, bezogen auf die vorliegende Größe der Wandausnehmung 41, derart ausgebildet sein, dass die Anlegekante beim Einschieben des Installationsgehäuses 30 in die Wandausnehmung 41 über deren Rand überstehen. Beim Einsetzen des Installationsgehäuses 30 mit den Adaptern 10 in die Wandausnehmung 41 werden die Positionierlaschen 13.1, 13.2, 14.1, 14.2 dann mit ihren Anlegekanten 15 federelastisch verstellt, mithin in Richtung der Öffnung der Wandausnehmung 41. in der Montageposition des Installationsgehäuses 30 liegen die Anlegekanten 15 an der Seitenwandung 42 der Wandausnehmung 41 an, wobei die Positionierlaschen 13.1, 13.2, 14.1, 14.2 geringfügig vorgespannt zur Öffnung der Wandausnehmung 41 hin geneigt sind. Zum Herausnehmen des Installationsgehäuses 30 aus der Wandausnehmung 41 müssen die Positionierlaschen 13.1, 13.2, 14.1, 14.2 in die entgegengesetzte Richtung umgebogen werden, wodurch sie fest gegen die Seitenwandung 42 angedrückt werden. Dadurch wird dem Herausziehen des Installationsgehäuses 30 aus der Wandausnehmung 41 ein Widerstand entgegengesetzt und das Installationsgehäuse 30 in der Wandausnehmung 41 gehalten.

Durch Drehen des Installationsgehäuses 30 um die Tiefenrichtung 2 kann das Installationsgehäuse 30 exakt ausgerichtet werden. Dazu kann der in Fig. 11 gezeigte Gehäusedeckel 34 auf das Isolationsgehäuse 30 aufgesetzt und in eine der Geräteaufnahmen 34.1 beispielsweise eine Wasserwaage eingesetzt werden. Vorzugsweise wird das Installationsgehäuse 30 so tief in die Wandausnehmung 41 eingeschoben, dass es mit der vorderen Fläche der Wand 40 abschließt oder entsprechend der Dicke einer auf die Wand 40 aufzutragenden Putzschicht aus der Wandausnehmung 41 herausragt.

Ist das Installationsgehäuse 30 korrekt ausgerichtet, kann es mittels der Schrauben 10.1 an der Wand 40 festgelegt werden. Dazu wird jeweils eine der Schrauben 10.1 durch eine schräg zur Tiefenrichtung 2 ausgerichtete Schraubenaufnahme 13.4 eines Montageelements 13.3 geführt, wie dies in Fig. 7 gezeigt. Die Schrauben 10.1 werden dann in die Seitenwandung 42 der Wand 40 eingeschraubt.

Sind die Anlegekante 15 der Positionierlaschen 13.1, 13.2, 14.1, 14.2 der an dem Installationsgehäuse 30 befestigten Adapter 10 beim Einsetzen des Installationsgehäuses 30 in die Wandausnehmung 41 entlang dem Rand der Bohrungen der Wandausnehmung 41 angeordnet, so kann das Installationsgehäuse 30 zusammen mit den Adaptern 15 leichtgängig in die Wandausnehmung 41 eingeschoben, ausgerichtet und mittels der durch die Schraubenaufnahmen 13.4 geführten Schrauben 10.1 festgelegt werden.

Es ist denkbar, dass Installationsgehäuse 30 mittels einer oder mehrerer durch ein oder mehrere Halteelemente 20 geführte Montageschrauben mit der Wand 40 zu verbinden. Dies kann zusätzlich zu der Befestigung mit Hilfe der Adapter 10 erfolgen. Eine solche Befestigung mittels durch die Halteelemente 20 geführte Montageschrauben kann auch dann vorteilhaft sein, wenn der Radius der Bohrungen, welche die Wandausnehmung 41 bilden, zu groß ist, wenn also die Anlegekanten 15 der Adapter 10 nicht an die Seitenwandung 42 der Wandausnehmung 41 gedrückt werden. Zur exakten Positionierung der Montageschraube kann diese mit ihrer Spitze an der Positioniermarke 21.4 eines Halteelements 20 angesetzt und dann die Montageschraube durch den aus Kunststoff gefertigte Deckel 21.3 des Halteelements 20 gestoßen werden. Die Montageschraube wird anschließend durch den Hülsenabschnitt 21 und die Rinne 22.1 des Halteelements 20, wie sie in den Fig. 8 und 9 gezeigt sind, zur Rückseite der Wandausnehmung 41 geführt und dort eingeschraubt. Dabei kann der Verschluss 21.1 des Hülsenabschnitts 21 von der Montageschraube geöffnet oder durchstoßen werden.

Fig. 16 zeigt in einer perspektivischen Darstellung das in Fig. 13 gezeigte Installationsgehäuse 30 mit einem teilweise in das Installationsgehäuse 30 eingeschoben Einsatz 50. Bei dem Einsatz 50 kann es sich um eine beliebige, für die Anordnung in dem Installationsgehäuse 30 ausgebildete elektronische Installationseinheit handeln, beispielsweise eine Internet- oder eine Telefonanschlussdose.

Der Einsatz 50 wird in das Installationsgehäuse 30 eingeschoben und dort mittels eines aufgesetzten Rahmens 50 gehalten. Der Rahmen 51 weist dazu Bohrungen auf, durch welche die Befestigungsschrauben 25 geführt und in die an dem Isolationsgehäuse 30 festgelegten Halteelemente 20 eingeschraubt werden.

Die Adapter 10 eignen sich besonders für die Befestigung von Installationsgehäusen 30 in Ziegelmauern, können aber auch vorteilhaft in aus anderen Materialien erstellten Wänden 40 eingesetzt werden. Sie können einfach oben und unten an dem Isolationsgehäuse 30 vormontiert und anschließend in die Wandausnehmung 41 eingeschoben. Durch die Positionierlaschen 13.1, 13.2, 14.1, 14.2 ist das Installationsgehäuse 30 fest an der Wand 40 gehalten. Durch die radial geschnittenen Positionierlaschen 13.1, 13.2, 14.1, 14.2 ergibt sich eine ausreichende Flexibilität, um das Installationsgehäuse 30 gerade auszurichten. Ist die Wandausnehmung 41 sehr groß ausgebildet, kann das Installationsgehäuse 30 vorteilhaft durch Montageschrauben, welche durch die Halteelemente 20 direkt in die Wand 40 eingeschraubt werden, innerhalb der Wandausnehmung 41 an der Wand 40 befestigt werden.

Die Halteelemente 20 können sowohl zur Befestigung des Installationsgehäuses 30 an der Wand 40 wie auch zur Fixierung eines in dem Installationsgehäuse 30 eingesetzten Einsatzes 50 verwendet sein Nach dem Verputzen beziehungsweise Polieren, während dem das Installationsgehäuse 30 vorzugsweise mit dem Gehäusedeckel 34 verschlossen ist, können die Halteelemente 20 einfach aufgefunden werden. Durch den rückseitig in die Öffnung des Hülsenabschnitts 21 eingesetzten Verschluss 21.1 ist sichergestellt, dass kein Beton oder Mörtel in das Innere des Hülsenabschnitts 21 eindringt. Durch eingegossenen Beton wird der Verschluss 21.1 gegen die rückseitige Öffnung des Hülsenabschnitts 21 gedrückt, sodass der Hülsenabschnitt 21 sicher verschlossen bleibt. Zur Vorderseite hin ist der Hülsenabschnitt 21 durch den Deckel 21.3 verschlossen, sodass auch hier kein Beton, Mörtel oder Putz in den Hülsenabschnitt 21 eindringen kann. Eine Befestigungsschraube 25 mit spitzem Ansatz kann direkt durch den Deckel 21.3 hindurch in den Hülsenabschnitt 21 eingeschraubt werden, es ist kein zusätzliches Hilfswerkzeug zum Öffnen des Hülsenabschnitts 21 erforderlich. Das Führungselement 23 führt in Kombination mit dem Halteansatz 24 zu einer belastbaren Halterung der Halteelemente 20 an dem Installationsgehäuse 30.

In den Fig. 11 bis 16 ist die Montage des Installationsgehäuses 30 mit Adaptern 10 gezeigt, welche Montageelemente 13.3 zur Befestigung mittels Schrauben 10.1 aufweisen und wie sie in den Fig. 1 bis 3 und 7 gezeigt sind. Bei der Verwendung des in Fig. 4 bis 6 gezeigten zweiten Adapters 110 sind keine solchen Montageelemente 13.3 vorgesehen. Der zweite Adapter 110 kann entsprechend der vorangegangenen Beschreibung zu dem Adapter 10 mit dem Installationsgehäuse 30 verbunden werden. Die Funktion der Halteelemente 20 ist dabei unverändert. Beim Einschieben des Installationsgehäuses 30 mit derart ausgebildeten, zweiten Adaptern 110 greifen die zweiten Fixieransätze 19.2, wie sie entlang der Anlegekanten 15 der mittigen Positionierlaschen 13.1, 14.1 angeformt sind, verstärkt in die Seitenwandung 42 der Wandausnehmung 41 ein. Dadurch ist das Installationsgehäuse 30 auch ohne zusätzliche Schrauben 10.1 sicher in der Wandausnehmung 41 gehalten, kann aber dennoch in Umfangsrichtung ausgerichtet werden. Durch die zweiten Fixieransätze 19.2 können Abweichungen des Durchmessers der Bohrungen, durch welche die Wandausnehmung 41 gebildet ist, ausgeglichen werden. So greifen die zweiten Fixieransätze 19.2 in die Seidenwandung 42 ein, wenn der Radius der Bohrungen größer ausfällt als der Radius, auf dem die Anlegekanten 15 der Positionierlaschen 13.1, 13.2, 14.1, 14.2 angeordnet sind.

## Patentansprüche

1. Halteelement (20) für ein Installationsgehäuse (30), wobei das Halteelement (20) als langgestrecktes Kunststoffbauteil ausgebildet ist, wobei das Halteelement (20) in seinem vorderen Bereich einen Hülsenabschnitt (21) und in seinem hinteren Bereich einen einstückig mit dem Hülsenabschnitt (21) verbundenen Verlängerungsabschnitt (22) aufweist, wobei der Hülsenabschnitt (21) eine Schraubaufnahme ausbildet, wobei der Hülsenabschnitt (21) an seinem einen Ende verschlossen und an seinem gegenüberliegenden Ende eine verschließbare Öffnung aufweist, und wobei zur Befestigung des Halteelements (20) an dem Installationsgehäuse (30) an einer Längsseite des Haltelements (20) ein in Längserstreckung des Halteelements (20) verlaufendes Führungselement (23) angeordnet ist, **dadurch gekennzeichnet,**
**dass** der Hülsenabschnitt (21) einen Verschluss (21.1) aufweist und an seinem dem Verlängerungsabschnitt (22)
zugewandten Ende gegenüber dem verschlossenen Ende mit dem Verschluss (21.1) verschließbar ausgebildet ist.

2. Halteelement (20) nach Anspruch 1, **dadurch gekennzeichnet, dass** der Hülsenabschnitt (21) an seinem dem Verlängerungsabschnitt (22) abgewandten Ende von einem einteilig angeformten Deckel (21.3) verschlossen ist.

3. Halteelement (20) nach Anspruch 1 oder 2, **dadurch gekennzeichnet, dass** an dem Deckel (21.3) eine Positioniermarke (21.4) angeordnet ist, wobei die Positioniermarke (21.4) vorzugsweise als Vertiefung, insbesondere als eine auf der Oberseite des Deckels (21.3) eingeformte konkave Mulde ausgebildet ist.

4. Halteelement (20) nach Anspruch 3, **dadurch gekennzeichnet, dass** die Materialstärke des Deckels (21.2) im Bereich der Positioniermarke (21.4) gegenüber dem die Positioniermarke (21.4) umgebenden Bereich des Deckels (21.2) und/oder gegenüber der Wandstärke des an den Deckel (21.3) angrenzenden Bereichs des Hülsenabschnitts (20) verringert ist.

5. Halteelement (20) nach einem der Ansprüche 1 bis 4, **dadurch gekennzeichnet, dass** der Verschluss (21.1) mit einem Filmscharnier (21.2) einteilig mit dem Verlängerungsabschnitt (22) oder dem Hülsenabschnitt (21) verbunden ist.

6. Halteelement nach Anspruch 5, **dadurch gekennzeichnet, dass** der Verschluss (21.1) mittels des Filmscharniers (21.2) gegenüberliegend der das Führungselement (23) tragenden Längsseite des Halteelements (20) angeformt ist, wobei vorzugsweise die durch das Filmscharnier (21.2) gebildete Biegeachse quer zur Längserstreckung des Halteelements (20) verläuft.

7. Halteelement (20) nach einem der Ansprüche 1 bis 5, **dadurch gekennzeichnet, dass** der Verlängerungsabschnitt (22) eine von Wandabschnitten (22.2) eingefasste und entlang der Längserstreckung des Halteelements (20) ausgerichtete Rinne (22.1) ausbildet und dass die Rinne (22.1) in axialer Verlängerung des Hohlraums des Hülsenabschnitts (21) ausgebildet ist.

8. Halteelement nach Anspruch 7, **dadurch gekennzeichnet, dass** der Verschluss (21.1) in der Schließposition zumindest bereichsweise von den Wandabschnitten (22.2) der Rinne (22.1) seitlich überdeckt ist.

9. Halteelement (20) nach Anspruch 7 oder 8, **dadurch gekennzeichnet, dass** der Querschnitt der Rinne (22.1) gleich oder größer als der Querschnitt des die Schraubaufnahme bildenden Hohlraums des Hülsenabschnitts (21) ausgebildet ist.

10. Halteelement (20) nach einem der Ansprüche 7 bis 9, **dadurch gekennzeichnet, dass** die Rinne (22.1) an ihrem dem Hülsenabschnitt (21) abgewandten Ende in ihrer Längsrichtung offen ausgebildet ist und/oder dass die Rinne (22.1) entlang ihrer Längserstreckung gegenüberliegend zu dem Führungselement (23) offen ausgebildet ist.

11. Halteelement (20) nach einem der Ansprüche 7 bis 10, **dadurch gekennzeichnet, dass** an den Außenseiten der Wandabschnitte (22.2) Versteifungselemente (22.3) angeformt sind.

12. Halteelement (20) nach Anspruch 11, **dadurch gekennzeichnet, dass** die Versteifungselemente (22.3) durch entlang der Längserstreckung des Halteelements (20) beabstandet zueinander angeordnete, sich quer zur Längserstreckung des Halteelements (20) erstreckende Stege gebildet sind.

13. Halteelement (20) nach einem der Ansprüche 7 bis 12, **dadurch gekennzeichnet, dass** die Führungsschiene (23) zumindest abschnittsweise gegenüberliegend von der Rinne (22.1) an dem Verlängerungsabschnitts (22) angeformt ist.

14. Halteelement (20) nach einem der Ansprüche 1 bis 13, **dadurch gekennzeichnet, dass** ein Halteansatz (24) mittelbar oder unmittelbar an das dem Verlängerungsabschnitt (22) zugeordnete Ende der Führungsschiene (23) angeschlossen ist, dass der Halteansatz (24) das als Führungsschiene ausgebildete Führungselement (23) quer zu dessen Längserstreckung überragt und dass an den Halteansatz (24) seitlich der Führungsschiene in Richtung zur Führungsschiene ausgerichtete Anlaufschrägen (24.1) angeformt sind, die in steile Rastflanken übergehen.

## Claims

1. Retaining element (20) for an installation housing (30), the retaining element (20) being designed as an elongated plastic component, the retaining element (20) having a sleeve section (21) in its front region and an extension section (22) in its rear region which is integrally connected to the sleeve section (21), the sleeve section (21) forming a screw receptacle, wherein the sleeve section (21) is closed at its one end and has a closable opening at its opposite end, and wherein a guide element (23) extending in the longitudinal direction of the retaining element (20) is arranged on a longitudinal side of the retaining element (20) for fastening the retaining element (20) to the installation housing (30),
**characterized in**
**in that** the sleeve section (21) has a closure (21.1) and, at its end facing the extension section (22), is designed to be closable with the closure (21.1) opposite the closed end.

2. Retaining element (20) according to claim 1, **characterized in that** the sleeve section (21) is closed at its end facing away from the extension section (22) by a cover (21.3) integrally formed in one piece.

3. Retaining element (20) according to claim 1 or 2, **characterized in that** a positioning mark (21.4) is arranged on the cover (21.3), the positioning mark (21.4) preferably being formed as a recess, in particular as a concave depression formed on the upper side of the cover (21.3).

4. Retaining element (20) according to claim 3, **characterized in that** the material thickness of the cover (21.2) in the region of the positioning mark (21.4) is reduced relative to the region of the cover (21.2) surrounding the positioning mark (21.4) and/or relative to the wall thickness of the region of the sleeve section (20) adjoining the cover (21.3).

5. Retaining element (20) according to any one of claims 1 to 4, **characterized in that** the closure (21.1) is integrally connected to the extension section (22) or the sleeve section (21) by a film hinge (21.2).

6. Retaining element according to claim 5, **characterized in that** the closure (21.1) is integrally formed by means of the film hinge (21.2) opposite the longitudinal side of the holding element (20) carrying the guide element (23), preferably the bending axis formed by the film hinge (21.2) extending transversely to the longitudinal extension of the holding element (20).

7. Retaining element (20) according to one of claims 1 to 5, **characterized in that** the extension section (22) forms a channel (22.1) enclosed by wall sections (22.2) and aligned along the longitudinal extension of the retaining element (20), and **in that** the channel (22.1) is formed in axial extension of the cavity of the sleeve section (21).

8. Retaining element according to claim 7, **characterized in that**, in the closed position, the closure (21.1) is laterally covered, at least in regions, by the wall portions (22.2) of the channel (22.1).

9. Retaining element (20) according to claim 7 or 8, **characterized in that** the cross-section of the channel (22.1) is designed to be equal to or larger than the cross-section of the cavity of the sleeve section (21) forming the screw receptacle.

10. Retaining element (20) according to one of claims 7 to 9, **characterized in that** the channel (22.1) is designed to be open in its longitudinal direction at its end facing away from the sleeve section (21) and/or **in that** the channel (22.1) is designed to be open along its longitudinal extent opposite the guide element (23).

11. Retaining element (20) according to one of claims 7 to 10, **characterized in that** stiffening elements (22.3) are formed on the outer sides of the wall sections (22.2).

12. Retaining element (20) according to claim 11, **characterized in that** the stiffening elements (22.3) are formed by webs arranged at a distance from one another along the longitudinal extent of the retaining element (20) and extending transversely to the longitudinal extent of the retaining element (20).

13. Retaining element (20) according to one of claims 7 to 12, **characterized in that** the guide rail (23) is integrally formed on the extension section (22) at least in sections opposite the channel (22.1).

14. Retaining element (20) according to one of claims 1 to 13, **characterized in that** a retaining projection (24) is indirectly or directly connected to the end of the guide rail (23) associated with the extension section (22), that the retaining projection (24) projects beyond the guide element (23) formed as a guide rail transversely to its longitudinal extension, and that run-up bevels (24. 1) are formed on the holding projection (24) laterally of the guide rail in the direction of the guide rail and merge into steep catch flanks.

## Revendications

1. Elément de retenue (20) pour un boîtier d'installation (30), l'élément de retenue (20) étant conçu comme une pièce allongée en matière plastique, l'élément de retenue (20) présentant dans sa zone avant une section de douille (21) et dans sa zone arrière une section de prolongement (22) qui est reliée d'un seul tenant à la section de douille (21), la section de douille (21) formant un logement de vis, dans lequel la section de manchon (21) est fermée à une de ses extrémités et présente une ouverture pouvant être fermée à son extrémité opposée, et dans lequel un élément de guidage (23) s'étendant dans la direction longitudinale de l'élément de retenue (20) est disposé sur un côté longitudinal de l'élément de retenue (20) pour fixer l'élément de retenue (20) au boîtier d'installation (30),
**caractérisé par**
en ce que la section de manchon (21) présente une fermeture (21.1) et est conçue, à son extrémité tournée vers la section d'extension (22), de manière à pouvoir être fermée avec la fermeture (21.1) opposée à l'extrémité fermée.

2. Elément de retenue (20) selon la revendication 1, **caractérisé en ce que** la section de manchon (21) est fermée à son extrémité opposée à la section d'extension (22) par un couvercle (21.3) formé d'un seul tenant.

3. Elément de retenue (20) selon les revendications 1 ou 2, **caractérisé en ce qu'**un repère de positionnement (21.4) est disposé sur le couvercle (21.3), le repère de positionnement (21.4) étant formé de préférence comme une dépression, en particulier comme une cuvette concave formée sur le côté supérieur du couvercle (21.3).

4. Elément de retenue (20) selon la revendication 3, **caractérisé en ce que** l'épaisseur de matériau du couvercle (21.2) dans la zone de la marque de positionnement (21.4) est réduite par rapport à la zone du couvercle (21.2) entourant la marque de positionnement (21.4) et/ou par rapport à l'épaisseur de paroi de la zone de la section de manchon (20) adjacente au couvercle (21.3).

5. Elément de retenue (20) selon l'une quelconque des revendications 1 à 4, **caractérisé en ce que** la fermeture (21.1) est reliée d'un seul tenant à la section d'extension (22) ou à la section de manchon (21) par une charnière à film (21.2).

6. Elément de retenue selon la revendication 5, **caractérisé en ce que** la fermeture (21.1) est formée d'une seule pièce au moyen de la charnière en film (21.2) en face du côté longitudinal de l'élément de retenue (20) portant l'élément de guidage (23), de préférence l'axe de flexion formé par la charnière en film (21.2) s'étendant transversalement à l'étendue longitudinale de l'élément de retenue (20).

7. Elément de retenue (20) selon l'une quelconque des revendications 1 à 5, **caractérisé en ce que** la partie d'extension (22) forme un canal (22.1) entouré par des parties de paroi (22.2) et aligné le long de l'extension longitudinale de l'élément de retenue (20), et **en ce que** le canal (22.1) est formé dans l'extension axiale de la cavité de la partie de manchon (21).

8. Elément de retenue selon la revendication 7, **caractérisé en ce que**, en position fermée, la fermeture (21.1) est recouverte latéralement, au moins par zones, par les portions de paroi (22.2) du canal (22.1).

9. Elément de retenue (20) selon la revendication 7 ou 8, **caractérisé en ce que** la section transversale du canal (22.1) est conçue pour être égale ou supérieure à la section transversale de la cavité de la section de manchon (21) formant le réceptacle de vis.

10. Elément de retenue (20) selon l'une quelconque des revendications 7 à 9, **caractérisé en ce que** le canal (22.1) est formé ouvert dans sa direction longitudinale à son extrémité opposée au tronçon de manchon (21) et/ou **en ce que** le canal (22.1) est formé ouvert le long de son extension longitudinale en face de l'élément de guidage (23).

11. Elément de retenue (20) selon l'une quelconque des revendications 7 à 10, **caractérisé en ce que** des éléments de raidissement (22.3) sont formés sur les côtés extérieurs des sections de paroi (22.2).

12. Elément de retenue (20) selon la revendication 11, **caractérisé en ce que** les éléments de raidissement (22.3) sont formés par des bandes disposées à distance les unes des autres le long de l'extension longitudinale de l'élément de retenue (20) et s'étendant transversalement par rapport à l'extension longitudinale de l'élément de retenue (20).

13. Elément de retenue (20) selon l'une des revendications 7 à 12, **caractérisé en ce que** le rail de guidage (23) est formé sur le profilé d'extension (22) au moins dans des sections opposées au canal (22.1).

14. Elément de retenue (20) selon l'une des revendications 1 à 13, **caractérisé en ce qu'**une saillie de retenue (24) est reliée directement ou indirectement à l'extrémité du rail de guidage (23) associée au tronçon d'extension (22), **en ce que** la saillie de retenue (24) dépasse de l'élément de guidage (23) réalisé sous forme de rail de guidage, transversalement à son étendue longitudinale, et **en ce que** des biseaux de montée (24. 1) sont formées sur la saillie de retenue (24) latéralement au rail de guidage dans la direction de ce dernier, ces saillies se transformant en flancs d'accrochage abrupts.
